Europäisches Patentamt

European Patent Office

Office européen des brevets

(19)

(11) Veröffentlichungsnummer: **0 110 077**
**A2**

## (12) EUROPÄISCHE PATENTANMELDUNG

(21) Anmeldenummer: **83110207.4**

(22) Anmeldetag: **13.10.83**

(51) Int. Cl.³: **F 02 D 9/10,** F 16 K 1/22

(30) Priorität: **29.11.82 DE 3244103**

(43) Veröffentlichungstag der Anmeldung: **13.06.84**
**Patentblatt 84/24**

(84) Benannte Vertragsstaaten: **FR GB NL SE**

(71) Anmelder: **VDO Adolf Schindling AG, Gräfstrasse 103, D-6000 Frankfurt/Main (DE)**

(72) Erfinder: **Vogler, Hans-Ulrich, Mörfelder Landstrasse 146, D-6000 Frankfurt am Main 70 (DE)**
Erfinder: **Ruschek, Gerhand, Elsa Brandström Strasse 1, D-6234 Hattersheim (DE)**
Erfinder: **Schlick, Horst, Sachsenstrasse 27, D-6231 Schwalbach (DE)**

(74) Vertreter: **Könekamp, Herbert, Dipl.-Ing., Sodener Strasse 9, D-6231 Schwalbach (DE)**

(54) **Drosselklappenstutzen.**

(57) In einem Stutzengehäuse (1) eines Drosselklappenstutzens ist um eine Achse (3) schwenkbar eine Drosselklappe (4) angeordnet. Um die Leckluftrate zu verringern, sind Mittel zur Verwirbelung der bei geschlossener Drosselklappe zwischen ihr und der Wandung der Bohrung des Stutzengehäuses (1) durchtretenden Leckluft vorgesehen. Vorzugsweise hat das Stutzengehäuse (1) zwei versetzt angebrachte, nicht durchgehende, ineinander mündende Bohrungen (7, 8), durch die zwei gegenüberliegende, in entgegengesetzte Richtungen weisende sichelförmige Stufen (7, 10) entstehen, gegen die die Drosselklappe (4) in Schließstellung anliegt.

EP 0 110 077 A2

VDO Adolf Schindling AG       - 1 -       6ooo Frankfurt/Main 9o
                                          Gräfstraße 1o3

                                          G-S Us-kl / 1684

                                          18. Nov. 1982

## Drosselklappenstutzen

Die Erfindung bezieht sich auf einen Drosselklappenstutzen
mit in einer Bohrung eines Stutzengehäuses schwenkbar angeordneter Drosselklappe. Ein solcher Drosselklappenstutzen
sitzt zum Beispiel am Vergaser eines Otto-Motors, um die vom
Motor angesaugte Luft durch Verschwenkung der Drosselklappe
regulieren zu können.

Bei Drosselklappenstutzen dieser Art tritt das Problem auf,
daß einerseits die Drosselklappe in Schließstellung den
freien Querschnitt möglichst weitgehend verschließen soll,
keinesfalls aber in Schließstellung klemmen darf. Man fertigt
deshalb den Drosselklappenstutzen mit der Drosselklappe mit
sehr hoher Fertigungsgenauigkeit und sieht für den Betätigungshebel der Drosselklappe einen verstellbaren Anschlag zur Festlegung der Schließstellung vor. Dadurch kann man durch Nachjustieren dafür sorgen, daß die Drosselklappe in Schließstellung bis in einer etwa 4 Grad schräg zur Querebene des
Drosselklappenstutzens verlaufenden Ebene gelangt, in der sie
noch nicht klemmt, jedoch den Querschnitt weitgehend versperrt. Trotzdem betragen die Leckluftraten bei Drosselklappenstutzen für Vergaser von Otto-Motoren für Kraftfahrzeuge etwa 5 kg/h und sind deshalb noch unerwünscht hoch.

Der Erfindung liegt die Aufgabe zugrunde, einen Drosselklappenstutzen der eingangs genannten Art zu entwickeln, bei dem ohne unerwünscht hohe Fertigungsgenauigkeit und ohne zeitaufwendiges Nachjustieren eine möglichst große Dichtigkeit in Schließstellung der Drosselklappe erreicht ist.

Diese Aufgabe wird erfindungsgemäß gelöst durch Mittel zur Verwirbelung der bei geschlossener Drosselklappe zwischen ihr und der Wandung der Bohrung durchtretenden Leckluft.

Diese erfindungsgemäße Lösung stellt eine Umkehr der bisherigen Konstruktionsprinzipien zur Erzielung einer möglichst dicht schließenden Drosselklappe dar. Statt durch immer engere Toleranzen und durch ein Nachjustieren wird dank der Erfindung eine große Dichtheit durch eine Verwirbelung des Leckluftstromes im Luftspalt erreicht. Der erfindungsgemäße Drosselklappenstutzen dichtet nach vergleichbaren Prinzipien wie eine Labyrinth-Dichtung. Er kann deshalb einen relativ großen Luftspalt haben, ohne daß unerwünscht hohe Leckluftraten auftreten. Dadurch wird es möglich, auf einen einstellbaren Anschlag zur Festlegung der Schließstellung zu verzichten, vielmehr kann ein fester, nicht verstellbarer Anschlag vorgesehen werden. Ein solcher nicht verstellbarer Anschlag erlaubt es auch, die in manchen Drosselklappenstutzen erforderliche Unterdrucksteuerbohrung von vornherein vorzusehen, während bei Drosselklappenstutzen mit verstellbarem Anschlag eine solche Steuerbohrung erst nach der Justage der Schließstellung der Drosselklappe gebohrt werden konnte, was natürlich beträchtliche Fertigungskosten mit sich brachte.

Ein besonders einfaches Mittel zur Verwirbelung der Leckluft stellt eine in der Mantelfläche der Drosselklappe vorgesehene umlaufende Nut dar.

Wenn in die Nut ein federnder, ähnlich einem Kolbenring gestalteter Ring eingesetzt wird, dann läßt sich der Leckluftdurchsatz völlig verhindern.

Eine andere vorteilhafte Ausgestaltung der Erfindung besteht darin, daß durch eine durchgehende Bohrung und eine dazu versetzte, in die durchgehende Bohrung in Höhe der Drosselklappe mündende Bohrung im Drosselklappenstutzen eine sichelförmige Stufe vorgesehen ist, gegen die die Drosselklappe in Schließstellung anliegt. Eine Verwirbelung des Leckluftstromes findet bei dieser Ausführungsform an einer Seite der Drosselklappe zwischen der Drosselklappe und der sichelförmigen Stufe statt. Auf der anderen Seite der Drosselklappe kann man entweder auf ein solches Mittel zur Verwirbelung verzichten, oder zum Beispiel die im Anspruch 2 vorgesehene Nut anordnen. Die Nut kann natürlich auch dort verlaufen, wo sich die Stufe befindet, was fertigungstechnisch Vorteile hat und zu einer weiteren Verringerung der Leckluftrate beiträgt.

Die sichelförmige Stufe vermag den verstellbaren Anschlag für den Betätigungshebel zu ersetzen, so daß der Drosselklappenstutzen insgesamt billiger herstellbar ist als der bekannte Drosselklappenstutzen. Ein weiterer Vorteil dieser Ausführungsform ist, daß die Lage der Unterdrucksteuerbohrung durch die sichelförmige Stufe festgelegt wird, so daß sie nicht erst nach Einbau der Drosselklappe gebohrt werden muß, sondern von vorneherein vorgesehen sein kann.

Zur weiteren Verringerung der Leckluftrate tragen die im Anspruch 5 angegebenen Merkmale bei.

Durch die im Anspruch 6 angegebenen Merkmale läßt sich die Progression der Drehwinkel-Luftmassen-Kennlinie des Drosselklappenstutzens erhöhen, so daß während der ersten Öffnungswinkelgrade der Drosselklappe der freie Querschnitt langsamer zunimmt als bei einer üblichen Drosselklappe. Dadurch läßt sich in diesem Anfangsbereich der freie Querschnitt feiner dosieren. Weiterhin vermögen in diesem Bereich arbeitende Regeleinrichtungen (zum Beispiel Geschwindigkeitsregeleinrichtung, Leerlaufregelung) effektiver zu arbeiten.

Die erfindungsgemäßen Merkmale zur Erreichung der Progression sind einfacher und damit billiger zu verwirklichen als die bisher zu diesem Zweck bekannten Maßnahmen, nämlich die Anordnung einer aufwendigen Hebelmechanik, die am Betätigungshebel der Drosselklappe angreift.

Die Querschnittsverengung zur Abflachung der Drehwinkel-Luftmassen-Kennlinie läßt sich besonders einfach durch die im Anspruch 7 angegebenen Merkmale verwirklichen.

Der Leckluftstrom läßt sich nahezu vollständig ausschließen, wenn gemäß einer anderen Ausgestaltung der Erfindung auf der sichelförmigen Stufe bzw. den sichelförmigen Stufen jeweils eine elastische Auflage angebracht ist.

Die Erfindung läßt zahlreiche Ausführungsmöglichkeiten zu. Vier davon sind in der Zeichnung dargestellt und werden nachfolgend beschrieben. Die Zeichnung zeigt in vier Figuren jeweils einen Längsschnitt durch einen die Erfindung betreffenden Bereich einer Ausführungsform eines Drosselklappenstutzens. In den einzelnen Figuren wurden funktionell gleiche Teile mit gleichen Positionszahlen versehen.

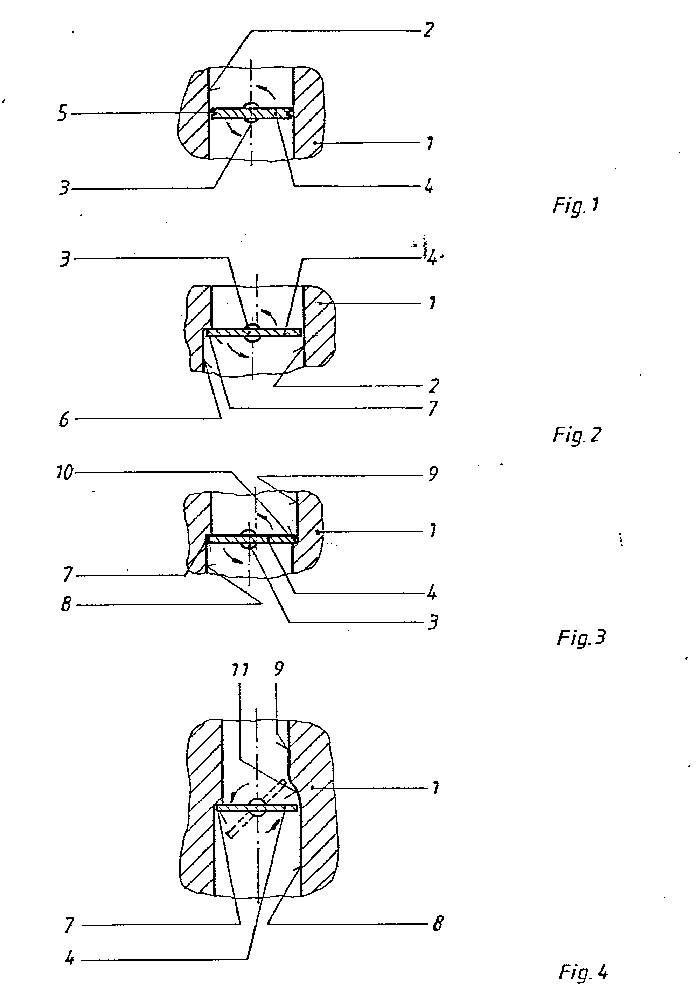

Die Figur 1 zeigt ein Stutzengehäuse 1 eines Drosselklappenstutzens, welches eine durchgehende zylindrische Bohrung 2 aufweist. In diese Bohrung 2 ist um eine waagerechte Achse 3 schwenkbar eine Drosselklappe 4 angeordnet, die genau wie die Bohrung 2 kreisförmigen Querschnitt hat. In der Mantelfläche der Drosselklappe 4 ist eine umlaufende Nut 5 vorgesehen. Diese hat rechteckigen Querschnitt und bewirkt, daß zwischen der Wandung der Bohrung 2 und der Drosselklappe 4 durchtretende Leckluft sich in ihr entspannen kann, bevor sie erneut komprimiert werden muß, um endgültig die Drosselklappe 4 zu passieren. Es kommt dadurch zu einer Verwirbelung, durch die die Leckluftrate im Vergleich zu einer üblichen Drosselklappe 4 mit glatter Mantelfläche sich erheblich vermindert.

Es sei angemerkt, daß der Drosselklappenstutzen üblicherweise aus Aluminium-Druckguß hergestellt wird und die Bohrung 2 deshalb nicht wie wörtlich zu verstehen ist durch Bohren erzeugt werden muß.

Nicht dargestellt ist, daß in der umlaufenden Nut 5 ein federnder Ring eingesetzt werden kann, der ähnlich einem Kolbenring ausgebildet ist und durch den die Drosselklappe 4 in Schließstellung vollständig dichtet.

Die Figur 2 zeigt wiederum das Stutzengehäuse 1 mit der um die Achse 3 schwenkbaren Drosselklappe 4. Im Stutzengehäuse 1 ist genau wie bei der Ausführungsform gemäß Figur 1 eine durchgehende Bohrung 2 vorgesehen. Von in der Zeichnung gesehen unten her ist eine durchmessergleiche Bohrung 6 bis in Höhe der Drosselklappe 4 geringfügig versetzt zur Bohrung 2 vorgesehen, so daß eine sichelförmige, nach unten weisende Stufe 7 entsteht, gegen die die Drosselklappe 4 in Schließstellung anliegt.

Bei der Ausführungsform gemäß Figur 3 sind im Stutzengehäuse 1 zwei durchmessergleiche Bohrungen 8, 9 seitlich zueinander versetzt und in Höhe der Drosselklappe 4 ineinander mündend vorgesehen. Dadurch entsteht zusätzlich zur sichelförmigen Stufe 7 auf der gegenüberliegenden Seite eine nach oben
weisende sichelförmige Stufe 1o.

Die Drosselklappe 4 liegt in Schließstellung sowohl gegen
die sichelförmige Stufe 7 als auch gegen die sichelförmige
Stufe 1o an. Nicht dargestellt ist, daß sowohl auf der
sichelförmigen Stufe 7 gemäß den Figuren 2 oder 3 als auch
auf der sichelförmigen Stufe 1o jeweils eine elastische
Auflage vorgesehen sein kann, durch die die Abdichtung der
Drosselklappe 4 in Schließstellung noch weiter zu verbessern
ist.

Figur 4 zeigt wiederum das Stutzengehäuse 1 mit zwei zueinander versetzten Bohrungen 8, 9, so daß eine sichelförmige
Stufe 7 entsteht. Die Bohrung 9 ist jedoch durchmesserkleiner
als die Bohrung 8. An der der sichelförmigen Stufe 7 gegenüberliegenden Seite befindet sich ein bogenförmiger Übergang 11, der entsprechend der Rotationsfläche der Drosselklappe 4 verläuft. Die Folge dieser Gestaltung ist, daß bei
einer geringen Verschwenkung der Drosselklappe 4 auf der
in der Zeichnung gesehen rechten Seite des Stutzengehäuses 1
kaum Querschnitt freigegeben wird, während auf der in der
Zeichnung gesehen linken Seite die Drosselklappe im normalen
Verhältnis öffnet. Der bogenförmige Übergang kann verschiedenartig gestaltet sein, je nach dem, welche Öffnungscharakteristik
man erzielen will. Denkbar ist es auch, auf der in der Zeichnung
gesehen linken Seite unterhalb der Drosselklappe einen entsprechenden bogenförmigen Übergang vorzusehen.

0110077

VDO Adolf Schindling AG       - 1 -        6ooo Frankfurt/Main 9o
                                           Gräfstraße 1o3

                                           G-S Us-kl / 1684

                                           18. Nov. 1982


### Ansprüche

1. Drosselklappenstutzen mit in einer Bohrung eines Stutzengehäuses schwenkbar angeordneter Drosselklappe, gekennzeichnet durch Mittel zur Verwirbelung der bei geschlossener Drosselklappe (4) zwischen ihr und der Wandung der Bohrung (2, 6, 8, 9) durchtretenden Leckluft.

2. Drosselklappenstutzen nach Anspruch 1, dadurch gekennzeichnet, daß in der Mantelfläche der Drosselklappe (4) eine umlaufende Nut (5) vorgesehen ist.

3. Drosselklappenstutzen nach Anspruch 2, dadurch gekennzeichnet, daß in der Nut (5) ein federnder, ähnlich einem Kolbenring gestalteter Ring eingesetzt ist.

4. Drosselklappenstutzen nach Anspruch 1,oder einem der folgenden, dadurch gekennzeichnet, daß durch eine durchgehende Bohrung (2) und eine dazu versetzte, in die durchgehende Bohrung (2) in Höhe der Drosselklappe (4) mündende Bohrung (6) im Stutzengehäuse (1) eine sichelförmige Stufe (7) vorgesehen ist, gegen die die Drossel-

klappe (4) in Schließstellung anliegt.

5. Drosselklappenstutzen nach Anspruch 1 oder einem der folgenden, dadurch gekennzeichnet, daß durch zwei versetzt angebrachte, nicht durchgehende, ineinander mündende in Höhe der Drosselklappe im Stutzengehäuse (1) zwei gegenüberliegende, in entgegengesetzte Richtungen weisende, sichelförmige Stufen (7, 1o) vorgesehen sind, gegen die die Drosselklappe (4) gleichzeitig in Schließstellung anliegt.

6. Drosselklappenstutzen nach Anspruch 1 oder einem der folgenden, dadurch gekennzeichnet, daß die Innenwandung der Bohrung (9) des Stutzengehäuses (1) im Bereich der Drosselklappe (4) zumindest an einer Seite der Drosselklappe (4) zur Rotationsfläche der Drosselklappe (4) hin eine Querschnittsverengung (bogenförmiger Übergang 11) hat.

7. Drosselklappenstutzen nach Anspruch 1 oder einem der folgenden, dadurch gekennzeichnet, daß die Querschnittsverengung an einer Seite in der Bohrung (9) des Stutzengehäuses (1) durch einen bogenförmigen Übergang (11) zu einer durchmesserkleineren Bohrung (9) vorgesehen ist und an der gegenüberliegenden Seite die sichelförmige Stufe (7) sich befindet.

8. Drosselklappenstutzen nach Anspruch 1 oder einem der folgenden, dadurch gekennzeichnet, daß auf der sichelförmigen Stufe (7) bzw. den Stufen (7, 1o) jeweils eine elastische Auflage angebracht ist.

1/1   0110077

Fig. 1

Fig. 2

Fig. 3

Fig. 4